# EUROPEAN PATENT APPLICATION

(11) **EP 4 797 496 A1**
(43) Date of publication of application: **26.08.2026**
(21) Application number: 25159494.1
(22) Date of filing: 21.02.2025
(51) Int. Cl.: H02J 13/00, H02H 3/28, H02H 3/30, H02H 3/05, H02H 1/00, H02H 3/04

(54) **SYSTEM FOR POWER LINE DIFFERENTIAL PROTECTION**

(71) Applicant: Hitachi Energy Ltd, 8050 Zürich (CH)
(72) Inventor: Gore, Rahul, 12834 Stockholm (SE); Wang, Jianping, 724 60 Västerås (SE); Tajdinian, Mohsen, 723 46 Västerås (SE); Hoq, Md Tanbhir, 722 46 Västerås (SE)
(74) Representative: AWA Sweden AB

(57) **Abstract**

The present disclosure relates to a protection assisting device (100) configured to communicatively connect to a first protection system (PS_{A}) at a first substation (10_{A}) of an electrical power network (EPN) and a second protection system (PS_{B}) at a second substation (10_{B}) of the electrical power network (EPN), the first substation (10_{A}) and the second substation (10_{B}) electrically connected to a power line (PL), the first protection system (PS_{A}) and the second protection system (PS_{B}) communicatively connected via a primary communication network (1001), said first protection system (PS_{A}) and said second protection system (PS_{B}) cooperating to provide differential protection via a respective first protection relay (R_{A}) and a second protection relay (R_{B}) based at least on a first power line measurement of the power line (PL) at the first substation (10_{A}) and a second power line measurement of the power line (PL) at the second substation (10_{B}). The protection assisting device (100) is configured to provide protection assisting information to the first protection relay and the second protection relay based on one or more predetermined protection assistance conditions determined from operational data received from the first protection system and the second protection system via a secondary communication network different from the primary communication network, which secondary communication network is a nondedicated communication network. The present disclosure also relates to a protection assisting system, an electrical power network, and a method of providing differential protection assistance.

## Description

### Technical Field

The present disclosure relates to a protection assisting device for assisting in differential protection in an electrical power network, a protection assisting system comprising the same, an electrical power network comprising the same, and a method of assisting differential protection in an electrical power network.

### Background

In power grids, substations serve as critical nodes, connecting generation, transmission, and distribution systems while enabling control over voltage levels, power flow, and system protection. To ensure efficient and reliable operation, power lines connecting two or more substations can be monitored to promptly detect anomalies.

One solution for monitoring and fault detection is differential protection. In this approach, the current flowing through a power line is measured at two respective substations. A pair of cooperating differential protection relays, which may be located at respective substations, each receives one of these current measurements locally and the other via a communication channel. The respective protection relays calculate the difference between the current measurements from the two substations to detect any abnormal condition. An abnormal condition may indicate a fault, such as a short circuit or ground fault. Upon detecting an abnormal condition, the affected substations can be operated to isolate the fault and mitigate its impact.

Differential protection is primarily used in high-voltage (HV) transmission systems, where HV power lines are typically monitored based on monitoring data transferred between substations using an optical link. However, there has recently been growing interest in cost-effective differential protection for medium-voltage (MV) lines. This demand arises from protection challenges associated with the integration of renewable energy sources at these voltage levels, as well as advancements in non-dedicated communication systems (e.g., public Ethernet or mobile networks) that are increasingly capable of meeting the performance requirements for reliable protection solutions.

While non-dedicated communication networks can be more cost-efficient than optical links, they face challenges such as variable packet delays, time synchronization errors (e.g., clock offsets), and packet losses. These issues can lead to incorrect or delayed data processing. Additionally, non-dedicated communication networks are more susceptible to cybersecurity threats compared to optical links. A cybersecurity threat typically involves interrupting electrical power flow, even if the power grid is operating nominally.

As an example of a cybersecurity solution, US20230129205A1 discloses a system and method for the protection of an electrical grid. In this system, a cyber health module receives remote signals from two remote directional protective relays and outputs a reliability signal based on the consistency of these remote signals and the operational status of the communication channels. A circuit breaker may interrupt electrical power flow only when the reliability signal indicates consistency.

In view of the above, there is a clear need for an improved solution when implementing differential protection with more cost-efficient communication networks.

### Summary

It is an object of the present disclosure to provide an improved solution that alleviates at least some drawbacks with present solutions or improves over present solutions in at least one aspect or provides an alternative over present solutions in at least one aspect. This and/or at least one other object, which will be implicitly or explicitly detailed in the following disclosure, is solved by one or more of the inventions defined in the claims. Additional advantageous embodiments are described in the following.

The present disclosure is based on the inventors' realization that differential protection may be improved by means of a protection assisting device configured to assist differential protection via a non-dedicated communication network. By using a non-dedicated communication network, such as a cellular network, a Wi-Fi network, or a cloud communication network, the protection assisting device may advantageously monitor any data serving as basis for differential protection to detect any abnormal conditions in a cost-efficient manner. By monitoring the data, the protection assisting device may detect whether a differential protection operation is required and provide protection assisting information to the differential protection relays to assist them in providing differential protection. Further, the protection assisting device may account for variable packet delays, time synchronization errors (e.g., clock offsets), and packet losses, thus improving reliability of communication in a non-dedicated communication network. Further, by monitoring the data received via the non-dedicated communication network, the protection assisting device may implement measures to counteract any cybersecurity threats.

The protection assisting device may thus advantageously reduce the number of false positives and/or false negatives of any abnormal conditions in the electrical power network for which a decision of differential protection may be made. A false positive may be that the differential protection relays determine that a differential protection operation is required despite there is no need. A false negative may be that the differential protection relays determine that a differential protection operation is not required despite there is a need. These false positives and/or false negatives may arise due to e.g., mismatches in data integrity, deteriorating relay health of the differential protection relays, faulty communication channels, or cyber-attacks. Thus, by using the aforementioned protection assisting device to monitor the data serving as basis for differential protection, a more accurate differential protection is provided.

When the first protection relay and the second protection relay are to perform a differential protection operation, either autonomously or based on differential protection assistance provided by the protection assisting device, they may control a first circuit breaker and a second circuit breaker respectively to disconnect a power line. The first circuit breaker may be located at the first substation. The second circuit breaker may be located at the second substation. It should be understood that each protection relay at a respective substation may control a corresponding circuit breaker to disconnected a power line.

A further advantage of the protection assisting device is that, as the protection assisting device is communicatively connected to each of the differential protection relays, the protection assisting device may advantageously transmit any operation data, or any partial data thereof, between differential protection relays via the non-dedicated communication network. This may advantageously improve redundancy and/or provide an alternative way of communicating between the differential protection relays should a primary way of communication be hampered in any way. Thus, the aforementioned protection assisting device may advantageously provide a more robust differential protection.

According to a first aspect of the present disclosure, an embodiment of the protection assisting device for assisting in differential protection in an electrical power network is provided. The protection assisting device is configured to communicatively connect to a first protection system at a first substation of an electrical power network. The protection assisting device is configured to communicatively connect to a second protection system at a second substation of the electrical power network. The first substation and the second substation are electrically connected or connectable to a power line. The first protection system and the second protection system are communicatively connected or connectable via a primary communication network. The first protection system and the second protection system cooperate to provide differential protection via a respective first protection relay and a second protection relay. The differential protection is based at least on a first power line measurement of the power line at the first substation and a second power line measurement of the power line at the second substation. The protection assisting device is configured to communicatively connect to the first protection system and the second protection system via a secondary communication network, which secondary communication network is different from the first communication network. The protection assisting device is configured to receive first operational data from the first protection system and second operational data from the second protection system via the secondary communication network. The protection assisting device is configured to determine whether said first operational data and/or said second operational data satisfies at least one predetermined protection assisting condition. The protection assisting device is configured to provide protection assisting information to the first protection relay and the second protection relay via the secondary communication, wherein said protection assisting information comprises an instruction to activate or delay differential protection when at least one predetermined protection assisting condition of said at least one predetermined protection assisting condition is satisfied. The secondary communication network is a non-dedicated communication network.

The protection assisting device according to the embodiment of the first aspect may advantageously be implemented to provide a more accurate and robust differential protection. The protection assisting device may advantageously account for any shortcomings arising due to the use of a non-dedicated communication network, thereby enabling a robust yet cost-effective solution to improve differential protection.

The protection assisting device may be configured to communicatively connect to a plurality of pairs of protection systems, each with its respective at least one protection relay, and each protection system arranged at a different substation. The protection assisting device may thus advantageously provide differential protection assistance to a plurality of pairs of differential protection relays.

The protection assisting device may be configured to communicatively connect to a supervisory control and data acquisition, SCADA, system configured to monitor the first substation and the second substation (or any further substations). Thus, an operator of the SCADA system may monitor the protection assisting device or the differential protection assistance it provides to the protection systems and their respective differential protection relays.

It should be understood that operational data may comprise measurement data (e.g., data pertaining to a power line measurement) and/or system data (e.g., data pertaining to any one component of a protection system) and/or any load data (e.g., data pertaining to load conditions of the electrical power network). The operational data may comprise signal data indicating the measurement data and/or the system data and/or the load data. The operational data may comprise at least one predetermined protection assisting signal indicating whether a corresponding predetermined protection assisting condition is satisfied. The operational data may comprise at least one heartbeat signal indicating a health of a corresponding component of the protection system (such as the protection relay, a network device, etc.).

It should further be understood that the first substation and the second substation may be located at different geographical areas (e.g., different countries). The protection assisting device may advantageously provide protection assistance across boundaries between any two different geographical areas.

The protection assisting device may be a stationary arrangement. The protection assisting device may comprise at least one processor and a memory communicatively connected to said at least one processor. The memory may be configured to store instructions executable by the at least one processor to perform a function of the protection assisting device, such as any one of the functions described in the present disclosure. The memory may be configured to store any operational data received from the first protection system and the second protection system. The protection assisting device may comprise a communication unit configured to facilitate communication between the protection assisting device and the first protection system and between the protection assisting device and the second protection system.

The protection assisting device may be configured to communicatively connect with more than two protection systems, each protection system arranged at a respective substation, and the at least one processor, the memory, and the communication unit may be adapted accordingly. The protection assisting device may be configured to communicatively connect with a display unit to display any operational data received and any data determined based on said operational data to a user. The protection assisting device may comprise a user interface unit configured to enable a user to control the protection assisting device and any differential protection assistance provided by the protection assisting device.

According to one embodiment, the protection assisting information is provided to the first protection relay and the second protection relay via a protection assisting signal, wherein said protection assisting information is indicated by said protection assisting signal and/or by timing characteristics of said protection assisting signal.

The protection assisting signal may be a digital signal. The protection assisting device may be configured to encode the protection assisting information in said protection assisting signal using any one of, or any combination of, binary encoding, amplitude modulation, frequency modulation, and phase modulation.

Alternatively, or in combination, timing characteristics of the protection assisting signal may indicate the protection assisting information. For instance, the protection assisting signal may be transmitted at a predetermined interval indicating no abnormal conditions are identified, whereby the differential protection relays may perform differential protection as needed without any further assistance, whereas a deviation from the predetermined interval indicates at least one abnormal condition is identified, whereby the differential protection relays may delay differential protection operation until the abnormal condition is resolved.

According to one embodiment, the at least one predetermined protection assisting condition comprises a plurality of predetermined protection assisting conditions, wherein the protection assisting device is configured to provide the protection assisting information comprising the instruction to activate differential protection when at least two predetermined protection assisting conditions of the plurality of predetermined protection assisting conditions are satisfied.

This may advantageously provide a more robust differential protection. This may in particular delay or prevent differential protection prompted by a cyber-attack as it requires that a plurality of individual predetermined protection assisting conditions are manipulated to be satisfied.

The plurality of predetermined protection assisting conditions may comprise 2, 3, 4, 5, 6, 7, 8, 9, 10 or more predetermined protection assisting conditions. The protection assisting device may be configured to provide the protection assisting information comprising the instruction to activate differential protection when at least X predetermined protection assisting conditions of the plurality of predetermined protection assisting conditions are satisfied, wherein X is 2, 3, 4, 5, 6, 7, 8, 9, 10 or more. The at least X predetermined protection assisting conditions may be any combination of the plurality of predetermined assisting conditions.

According to one embodiment, the protection assisting device is configured to provide the protection assisting signal based on at least one protection assisting condition signal, wherein each protection assisting condition signal indicates whether a corresponding at least one predetermined protection assisting condition associated with each protection assisting condition signal is satisfied. In other words, at least one protection assisting condition signal may be processed by the protection assisting device to provide the protection assisting signal.

The protection assisting device may be configured to determine, based on the first operational data and/or the second operational data, at least one protection assisting condition signal of the at least one protection assisting condition signal.

The protection assisting device may be configured to receive at least one protection assisting condition signal of the at least one protection assisting condition signal from a local edge computing node provided by a local edge device, which local computing node is configured to determine said at least one protection assisting condition signal based on the operational data. The local edge device may, alternatively or in combination, be a device configured to transfer data to and from a local protection system at a substation. That is, a first local edge device (situated at a first substation) may be configured to communicatively connect with a second local edge device (situated at a second substation different from the first substation). The edge devices may be configured to transfer data between protection systems of the respective substations and the protection assisting device via the secondary communication network. Any information to and from a protection relay may be provided via a local edge device. The local edge device may serve as a data gateway. The local edge device may be configured to perform at least one function to assist the protection assisting device in providing the protection assisting information. The local edge device at a respective substation may be an edge device of the secondary communication network, in particular when the secondary communication network is a non-dedicated communication network such as a cloud communication network.

Whether a predetermined protection assisting condition is satisfied may be indicated by a corresponding protection assisting condition signal and/or by timing characteristics of said protection assisting condition signal.

The protection assisting condition signal may be a digital signal. The protection assisting device may be configured to encode whether a predetermined protection assisting condition is satisfied in the protection assisting condition signal using any one of, or any combination of, binary encoding, amplitude modulation, frequency modulation, and phase modulation.

Alternatively, or in combination, timing characteristics of the protection assisting condition signal may indicate whether the predetermined protection assisting condition is satisfied.

According to one embodiment, said secondary communication network is a cloud communication network.

The cloud communication network may comprise at least a cloud-based infrastructure, a communication interface, and a data processing unit. The cloud-based infrastructure may comprise at least one remote server. The cloud-based infrastructure may be configured to store, manage, and process communication data transmitted through the cloud communication network. The cloud-based infrastructure may be configured to be distributed across multiple locations. The cloud-based infrastructure may be configured to scale up or scale down depending on demand by incorporating at least one dormant remote server. This may allow the cloud communication network to handle high volumes of communication efficiently.

The communication interface may be configured to enable different devices to exchange information, in particular the first protection system at the first substation, the second protection system at the second substation, and the protection assisting device. The communication interface may comprise wired connections, such as fiber optics or Ethernet cables, or wireless connections, such as Wi-Fi or cellular networks. This may ensure that communication can take place across various types of devices and locations.

The data processing unit may be configured to execute instructions stored in a memory which when executed controls at least one function of the cloud communication network, e.g., functions of handling information being sent and received, formatting the information as data, transmitting the data, and routing the data to a correct destination. The data processing unit may be a single processor, or a plurality of processors distributed across multiple cloud servers.

The cloud communication network may comprise at least one edge computing node. An edge computing node may be provided by a local edge device located closer to, or at, a relevant system, such as the first protection system or the second protection system. The at least one edge computing node may be configured to handle at least some operational data locally instead of sending the entire operational data to at least one server of the cloud communication network or the protection assisting device. As an example, an edge computing node at a substation may be configured to receive operational data, and process the operational data to determine at least one predetermined protection assisting condition signal, which at least one predetermined protection assisting condition signal is communicated to the protection assisting device for assessment. In such a case, the operational data may comprise the at least one predetermined protection assisting signal and optionally any other operational data that is preferably transmitted to the protection assisting device. That is, the local edge device may advantageously offload some work of the protection assisting device, such as determining at least one protection assisting condition signal from local operational data and/or determining a protection assisting signal locally based on the protection assisting information provided by the protection assisting device.

The cloud communication network may be configured to implement encryption. This may protect data from being accessed by unauthorized parties. The encryption may be any one of, or any combination of, end-to-end encryption, E2EE, symmetric encryption, asymmetric encryption, or hashing. It should however be understood that the present disclosure is not limited to these example encryptions and that other forms of encryptions may be implemented as an alternative.

According to one embodiment, the first operational data comprises first source data comprising at least one electrical parameter based at least on said first power line measurement of the power line at the first substation.

Source data may refer to local data, i.e., data which is provided locally. That is, first source data indicates that the data was provided at the first substation, whereas second source data indicates that the data was provided at the second substation.

Each electrical parameter of the at least one electrical parameter may be one of a voltage, a current, a frequency, resistance, capacitance, inductance, impedance, etc. The at least one electrical parameter may be one electrical parameter or a plurality of electrical parameters.

The at least one electrical parameter may be measured by a measurement device configured to make the power line measurement. The measurement device may be electrically connected to a current transformer or a voltage transformer. In this manner, the current or voltage may be transformed to a more manageable level. The first source data may be comprised in the first operational data.

According to one embodiment, the second operational data comprises second source data comprising at least one electrical parameter based at least on said second power line measurement of the power line at the second substation.

It should be understood that anything disclosed with regards to the first operational data may apply to the second operational data.

According to one embodiment, at least one predetermined protection assisting condition of said at least one predetermined protection assisting condition is at least one of said electrical parameter of said first source data and/or said at least one electrical parameter of said second source data being outside a predefined normal mode of operation.

As an example, at least one predetermined protection assisting condition is that an electrical parameter (voltage, current, etc.) of the power line at the first substation or the second substation is outside a predetermined normal mode of operation, i.e., outside a predetermined voltage interval indicative of a normal mode of operation.

According to one embodiment, at least one predetermined protection assisting condition of said at least one predetermined protection assisting condition is an anomaly based on a comparison between at least one of said electrical parameter of said first source data and a corresponding at least one of said electrical parameter of said second source data.

As an example, the anomaly may be an electrical parameter difference which is outside a predetermined electrical parameter difference interval indicative of a normal mode of operation. This may indicate a fault condition such as a current leakage.

According to one embodiment, the protection assisting device is configured to communicate said first source data from the first protection relay of the first protection system to the second protection relay of the second protection system, and/or communicate said second source data from the second protection relay of the second protection system to the first protection relay of the first protection system.

Thus, the protection assisting device may supply to the first protection relay or the second protection relay with a reference copy of the source data, which may allow the respective protection relay to compare the source data received via the primary communication network with the reference copy of the source data.

By comparing the received source data with the reference source data, the relevant protection relay may determine data integrity of the received source data. The data integrity may e.g., be carried out by data packet comparison of the source data (to verify that the received source data is complete) or phasor computation. Moreover, it may increase redundancy of the differential protection solution.

According to one embodiment, the second operational data comprises first destination data being the first source data as received from the first protection system in the second protection system via the primary communication network or the secondary communication network, wherein the protection assisting device is configured to determine data integrity of the second destination data based on a comparison with the second source data, wherein at least one predetermined protection assisting condition of said at least one predetermined protection assisting condition is an anomaly in data integrity of said second destination data.

Destination data may refer to external data, i.e., data which is provided externally from a different substation.

The protection assisting device may implement at least one method of checking data integrity, such as a checksum-based method, a hash function-based method, a cyclic redundancy check based method, a parity bit based method, a digital signature based method. This may advantageously improve security of operational data being transferred in the non-dedicated communication network.

It should be understood that the present disclosure is not limited to the aforementioned methods of checking data integrity, and other methods of checking data integrity may be implemented.

According to one embodiment, the first operational data comprises second destination data being the second source data as received from the second protection system in the first protection system via the primary communication network or the secondary communication network, wherein the protection assisting device is configured to determine data integrity of the first destination data based on a comparison with the first source data, wherein at least one predetermined protection assisting condition of said at least one predetermined protection assisting condition is an anomaly in data integrity of said first destination data.

It should be understood that anything disclosed with regards to the second operational data may apply to the first operational data.

According to one embodiment, said at least one electrical parameter of the first source data comprises a sample value and/or a phasor value based at least on said first power line measurement, and/or said at least one electrical parameter of the second source data comprises a sample value and/or a phasor value based at least on said second power line measurement.

The sample value may be a scalar value indicating at least a scalar value of a measured quantity.

The phasor value may be a complex number at least indicative of a magnitude and a phase of a measured quantity.

It should be understood that the aforementioned source data may comprise a time series of a plurality of sample values and/or phasor values measured by a plurality of power line measurements. That is, a sample rate of power line measurements may be higher than a communication rate with the protection assisting device. However, it should be understood that the present disclosure is not limited to any particular sample rate and/or communication rate.

According to one embodiment, the protection assisting device is configured to: perform a first source phasor computation on the first source data; perform a first destination phasor computation of the first destination data; determine further data integrity of the first destination data based on a comparison between a result of the first source phasor computation and a result of the first destination phasor computation, wherein at least one predetermined protection assisting condition of said at least one predetermined protection assisting condition is an anomaly in further data integrity of said first destination data. The protection assisting device may be configured to: perform a second source phasor computation on the second source data; perform a second destination phasor computation of the second destination data; determine further data integrity of the second destination data based on a comparison between a result of the second source phasor computation and a result of the second destination phasor computation, wherein at least one predetermined anomaly condition of said at least one predetermined anomaly condition is an anomaly in further data integrity of said second destination data.

Thereby, magnitude and phase are both accounted for in a data integrity check of the second destination data.

According to one embodiment, said first operational data and/or second operational data comprises at least one cyber security parameter, wherein at least one predetermined protection assisting condition of said at least one predetermined protection assisting condition is said at least one cyber security parameter of said first operational data and/or said second operational data indicating the electrical power network or any component thereof being subjected to a cyber-attack.

The at least one cyber security parameter may be one cyber security parameter or a plurality of cyber security parameters.

A cyber security parameter is a parameter which may indicate an ongoing, a pending, or a recent cyber-attack.

The at least one cyber security parameter may comprise a cyber security parameter indicative of unusual network traffic, such as a sudden increase in inbound or outbound network traffic that deviates from a normal usage pattern. Such unusual network traffic may arise due to Denial of Service, DOS, or Distributed DoS, DDOS, attacks.

The at least one cyber security parameter may comprise a cyber security parameter indicative of a malware presence in the primary communication network or the secondary communication network.

The at least one cyber security parameter may comprise a cyber security parameter indicative of unusual protocols in communicated data or data of suspicious origins.

The at least one cyber security parameter may comprise a cyber security parameter indicative of unusual processing power usage or memory usage at either the first protection system, in particular the first protection relay, or the second protection system, in particular the second protection relay.

The protection assisting device may be configured to receive cyber security data or a respective cyber security signal indicative of the least one cyber security parameter. The protection assisting device may be configured to monitor the at least one cyber security parameter and identify from said cyber security parameter whether there is a cyber-attack ongoing or pending, or one that has occurred recently.

According to one embodiment, said first operational data comprises diagnostic data of the first protection relay and/or said second operational data comprises diagnostic data of the second protection relay. At least one predetermined protection assisting condition of said at least one predetermined protection assisting condition is said diagnostic data indicating that the first protection relay and/or the second protection relay is subjected to malfunction or an increased risk of malfunction, or is inactive.

Diagnostic data may include, but is not limited to, system logs, performance metrics, error reports, network traffic data, hardware diagnostics, and security logs.

The protection assisting device may be configured to utilize the diagnostic data for troubleshooting, detecting anomalies, monitoring system health, and supporting forensic analysis in case of security incidents.

According to one embodiment, the first operational data comprises data of a first heartbeat signal from a first device of the first protection system and/or the second operational data comprises data of a second heartbeat signal from a second device of the second protection system, wherein at least one predetermined protection assisting condition of said at least one protection assisting condition is an anomaly in timing characteristics of said first heartbeat signal and/or of said second heartbeat signal, wherein, optionally, said first device is the first protection relay and/or said second device is the second protection relay.

A heartbeat signal may be a periodic signal or message transmitted at regular intervals to indicate that a protection relay, or any other component of a protection system, is operating correctly and remains active.

The heartbeat signal may allow the protection assisting device to monitor a protection relay to ensure it is functioning and hasn't encountered an error, crash, or failure.

The protection assisting device may be configured to, if the heartbeat signal is not received within a certain timeframe, identify that the protection relay is experiencing a failure. The protection assisting device may thus inform a cooperating protection relay at a different substation of this failure. Alternatively, or in combination, if available, the protection assisting device may instruct a protection system comprising the failing protection relay to activate a redundant protection relay to replace the failing protection relay.

According to one embodiment, said first operational data and/or said second operational data comprises communication data of said primary communication network and/or communication data of said secondary communication network, wherein at least one predetermined protection assisting condition of said at least one predetermined protection assisting condition is said communication data indicating the primary communication network and/or the second communication network is subjected to a malfunction or an increased risk of malfunction or is inactive.

Communication data may comprise information derived from a network's components, including traffic logs, error rates, connection records, performance metrics, and security events.

According to one embodiment, the power line is a medium voltage, MV, power line, a low voltage, LV, power line. Alternatively, the power line may be a high voltage, HV, power line.

HV typically refers to voltages that exceed those used for residential and/or commercial applications, with specific thresholds depending on the region. For example, the International Electrotechnical Commission (IEC) generally considers alternating current (AC) voltages of 1000 V or more, and direct current (DC) voltages of 1500 V or more, to be classified as high voltage. More specifically, HV may refer to electrical voltage levels equal to or greater than 35 kV and up to several hundred kilovolts.

MV typically refers to electrical voltage levels that are higher than LV, but lower than HV. MV typically includes voltages equal to or greater than 1 kV but less than 35 kV. These voltage levels are commonly used for power distribution within urban or industrial settings and for the transmission of power to transformers that supply end-user loads.

LV typically refers to electrical voltage levels that are used for residential, commercial, and light industrial applications. LV typically includes voltages less than 1 kV, with the most common being 230 V for residential use and 400 V for commercial and industrial applications. LV power lines may be used to distribute electrical power directly to end users, such as homes, businesses, and small industries.

It should be understood that any one power line connected between the first substation and the second substation may be any one of a HV, MV, or LV power line.

It should be further understood that the protection assisting device may provide differential protection assistance to cooperating differential protection relays for any one power line between the first substation and the second substation, which may be one power line of a plurality of power lines (such as in three-phase systems).

According to a second aspect, a protection assisting system is provided. The protection assisting system comprises the protection assisting device according to the first aspect or any embodiment thereof, and the secondary communication network. As described in the foregoing, the secondary communication network is a non-dedicated communication network. The secondary communication network may be a cloud communication network. The protection assisting system may comprise any elements of, or associated with, the secondary communication network described in the foregoing. As a non-limiting example, the protection assisting system may comprise a first local edge device configured to be arranged at the first substation and a second local edge device configured to be arranged at the second substation. The local edge devices may be configured to process the respective operational data and send only operational data for transmission that is of interest. The local edge devices may be configured to process the respective operational data to determine a respective at least one protection assisting condition signal to be communicated to the protection assisting device for assessment of differential protection assistance.

According to a third aspect, an electrical power network is provided. The electrical power network comprises at least one substation, wherein a first substation of said at least one substation is configured to electrically connect to a second substation via a power line. The electrical power network comprises a first protection system arranged at the first substation. The first protection system comprises a first protection relay configured to cooperate with a second protection relay of a second protection system at the second substation to provide differential protection, and a protection assisting device according to the first aspect or any embodiments thereof.

It should be understood that the first substation may be located in a first geographical area and the second substation may be located in a second geographical area different from the first geographical area. Thus, the protection assisting device may be configured to provide differential protection assistance to differential protection operating across different countries, etc..

The electrical power network may comprise the aforementioned protection assisting system according to the second aspect or any embodiments thereof.

The first substation and/or the second substation may electrically connect to a powerline via a respective busbar. The busbar may serve as an interface between components of a substation and the power line.

According to one embodiment, the electrical power network comprises the second substation and the second protection system. The electrical power network may comprise any plurality of substations. The electrical power network may comprise at least one transmission system and/or at least one distribution system. The at least one transmission system may be configured to electrically connect a power generation system with at least one (transmission) substation or between any two (transmission) substations. The at least one distribution system may be configured to electrically connect at least one load with at least one (distribution) substation or between any two (distribution) substations. The electrical power network may comprise at least one transmission and/or distribution system configured to electrically connect a first (transmission) substation with a second (distribution) substation.

Any one of the at least one transmission system and/or the at least one distribution system may comprise elements such as power lines (overhead, underground, etc.), support structures (e.g.,. towers), insulators, circuit breakers, transformers, capacitor banks and reactors, switch gear, surge arresters, and voltage converters. The aforementioned elements may be configured to cooperate to transmit power from a first substation to a second substation of said at least one substation.

According to one embodiment, the power line is a medium voltage, MV, power line, a high voltage, HV, power line.

According to one embodiment, the first protection system of said first substation comprises: a transformer configured to electrically connect to said power line to provide said power line measurement, and/or a circuit breaker configured to activate in response to a control signal to isolate a first portion of the power line from a second portion of the power line.

The transformer may be a current transformer or a voltage transformer. Thereby, the transformer may transform the current or voltage to a more manageable level for measurement by a measurement device. The transformer may comprise the measurement device as an integrated device. The transformer may be electrically connected to a power line via at least one busbar. The circuit breaker may be electrically connected to the power line. Thus, by operating a first circuit breaker at a first substation and a second circuit breaker at a second substation, a power line may be isolated. The circuit breaker may be a single use device, such as a fuse, or a multi-use device (such as a switch). The circuit breaker may be configured to automatically restore itself into a conducting state once an anomaly or an abnormal condition is resolved.

According to one embodiment, a protection relay at a substation can utilize at least one signal to detect faults and ensure reliable operation. The at least one signal may include at least one electrical signal (such as current, voltage, frequency) and/or a power measurement signal. The at least one electrical signal may be received e.g., from a current transformer (CT) or voltage transformer (VT). The power measurement signal may be determined based at least on the at least one electrical signal. The at least one signal may include at least one communication signal (such as SCADA data, IEC 61850 GOOSE signal, and pilot protection signals). The at least one communication signal may enable coordination with control systems and remote substations. The at least one signal may include environmental and mechanical signals, such as temperature, humidity, gas levels, and vibration data, allow monitoring of equipment conditions. Additionally, the at least one signal may comprise at least one of a binary input signal. Additionally the at least one signal may comprise a trip signal, a breaker position indicator signal, and/or an external alarm signal.

According to a fourth aspect, a method of providing protection assistance to a first protection system at a first substation of an electrical power network and a second protection system at a second substation of the electrical power network is provided. The first substation and the second substation are electrically connected to a power line. The first protection system and the second protection system are communicatively connected via a primary communication network. The first protection system and the second protection system cooperate to provide differential protection via a respective first protection relay and a second protection relay. The differential protection is based at least on a first power line measurement of the power line at the first substation and a second power line measurement of the power line at the second substation.

The method comprises receiving first operational data from the first protection system and second operational data from the second protection system via a secondary communication network different from the primary communication network, said secondary communication network being a non-dedicated communication network.

The method comprises determining whether said first operational data and/or said second operational data satisfies at least one predetermined protection assisting condition.

The method comprises providing protection assisting information to the first protection relay and the second protection relay via the secondary communication network, wherein said protection assisting information comprises an instruction to activate or delay differential protection when at least one predetermined protection assisting condition of said at least one predetermined protection assisting condition is satisfied.

The method may comprise at least one additional step, each additional step corresponding to any function described in reference to the protection assisting device according the first aspect or any embodiment thereof.

The method may present the same or similar advantages as described in reference to the protection assisting device according to the first aspect or any embodiment thereof.

According to a fifth aspect, a computer program is provided. The computer program comprises instructions which, when the program is executed by a computer, cause the computer to carry out the method according to the fourth aspect or any embodiments thereof.

According to a sixth aspect, a computer-readable storage medium is provided. The computer-readable storage medium comprises instructions which, when executed by a computer, cause the computer to carry out the method according to the fourth aspect or any embodiments thereof.

Effects and features of the second and third and fourth and fifth and sixth aspects are largely analogous to those described above in connection with the first aspect. Embodiments mentioned in relation to the first aspect are largely compatible with the second and third and fourth and fifth and sixth aspects. It is further noted that the inventive concepts relate to all possible combinations of features unless explicitly stated otherwise.

It should be understood that the protection assisting device may be configured to provide differential protection assistance to a plurality of pairs of protection systems, each protection system arranged at a respective substation, and any of the aforementioned embodiments may be adapted accordingly.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claims, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief Description of the Drawings

The invention will in the following be described in more detail with reference to the enclosed drawings, wherein:
Fig. 1a schematically illustrates a protection assisting device according to one embodiment of the present disclosure when communicatively connected to protection systems at different substations of an electrical power network;
Figs. 1b-1c schematically illustrate a process of data integrity check implemented by a protection assisting device according to one embodiment of the present disclosure;
Figs. 2a-2b schematically illustrate embodiments wherein the protection assisting device receives heartbeat signals of components of the protection systems;
Figs. 3a-3c schematically illustrate embodiments wherein the protection assisting device determines a protection assisting signal based on different sets of parameters received from the protection systems;
Fig. 4 schematically illustrates an embodiment wherein the protection assisting device determines a protection assisting signal based on a combination of different sets of parameters received from the protection systems;
Fig. 5 schematically illustrates a method of differential protection assistance according to one embodiment of the present disclosure;
Fig. 6 schematically illustrates an electrical power network according to one embodiment;
Figs. 7a-7c schematically illustrate different embodiments of a voltage source converter;
Fig. 7d schematically illustrates an energy storage system, and
Fig. 7e schematically illustrates power line connections to a substation of an electrical power network according to one embodiment.

### Description of Embodiments

Hereinafter, the principle of the present disclosure will be described with reference to illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The disclosed subject matter will now be described with reference to the attached drawings. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

According to an aspect of the present disclosure, a protection assisting device is provided. The protection assisting device is configured to provide differential protection assistance to at least one pair of protection systems arranged at a respectively different substations, each protection system comprising a respective differential protection relay, which protection relays form at least one cooperating pair of differential protection relays configured to provide differential protection. In order to assist the pair of differential protection relays, the protection assisting device is configured to receive operational data from the protection system, monitor the received operational data, and determine whether any differential protection assistance is needed. For instance, the protection assisting device may identify anomalies or abnormal conditions that are not identified by the pair of differential protection relays, and the protection assisting device may inform the pair of differential protection relays with the identified anomalies or abnormal conditions. This may allow the differential protection relays, depending on the identified anomaly or abnormal condition, to activate or delay a differential protection operation or initiate a differential protection operation immediately. Thereby, a more accurate and/or robust solution for differential protection is provided.

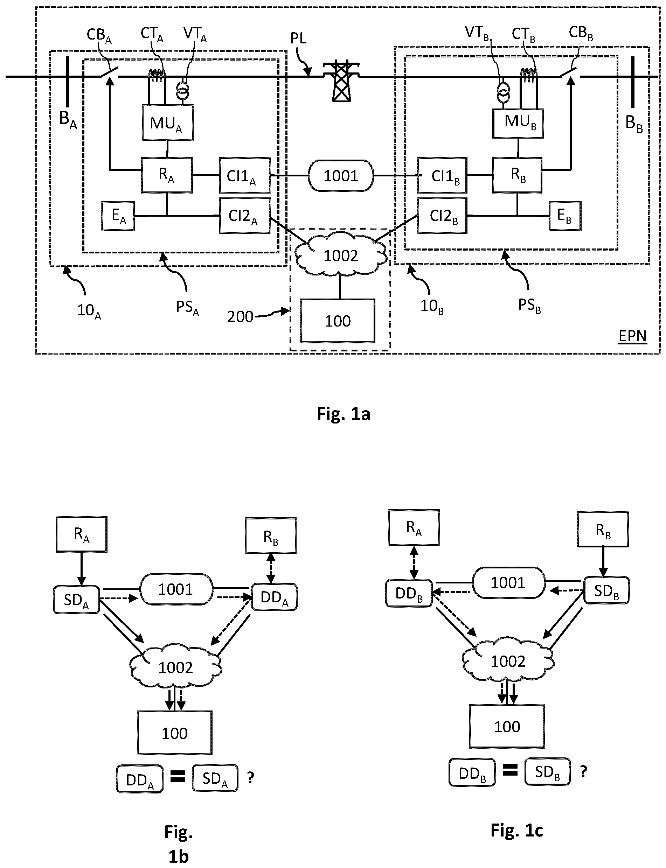

Fig. 1a schematically illustrates a protection assisting device 100 according to one embodiment of the present disclosure. The protection assisting device 100 is communicatively connected to protection systems PS_{A}, PS_{B} at different substations 10_{A}, 10_{B} of an electrical power network EPN. The protection assisting device 100 is configured to communicatively connect to a first protection system protection system PS_{A} at a first substation 10_{A} of an electrical power network EPN and a second protection system PS_{B} at a second substation 10_{B} of the electrical power network EPN. The first substation 10_{A} and the second substation 10_{B} are electrically connected to a power line PL. The power line PL may preferably be electrically connected to each substation by a respective busbar B_{A} and B_{B}. The first protection system PS_{A} and the second protection system PS_{B} are communicatively connected via a primary communication network 1001. The primary communication network may comprise at least one optical link communicatively connecting the first protection system PS_{A} and the second protection system PS_{B}. However, it should be understood that the primary communication network may be exemplified as many different types of communication networks. The first protection system PS_{A} and the second protection system PS_{B} cooperate to provide differential protection via a respective first protection relay R_{A} and a second protection relay R_{B} based at least on a first power line measurement of the power line PL at the first substation 10_{A} and a second power line measurement of the power line PL at the second substation 10_{B}. Although the differential protection relays R_{A}, R_{B} may operate autonomously without assistance from the protection assisting device 100, they may each be configured to receive additional input from the protection assisting device to facilitate a decision of whether to perform a differential protection operation. The protection assisting device 100 is configured to communicatively connect to said first protection system PS_{A} and said second protection system PS_{B} via a secondary communication network 1002 different from the primary communication network 1001. The secondary communication network 1002 is a non-dedicated communication network. The secondary communication network 1002 is preferably a cloud communication network. The protection assisting device 100 is configured to receive first operational data from the first protection system PS_{A} and second operational data from the second protection system PS_{B} via the secondary communication network 1002.

The first operational data and/or the second operational data may comprise measurement data pertaining to a respective power line measurement of the power line at the respective substations. The first operational data and/or the second operational data may comprise system data of the first protection system and/or the second protection system. The first operational data and/or the second operational data may comprise other data that may prove useful for providing differential protection assistance.

The protection assistance device 100 is configured to determine whether said first operational data and/or said second operational data satisfies at least one predetermined protection assisting condition. In other words, the protection assistance device 100 is configured to assess the data of the first operational data and the second operational data, individually or in combination, whether at least one predetermined protection assisting condition is satisfied. The at least one predetermined protection assisting condition may be one predetermined protection assisting condition or a plurality of predetermined protection assisting conditions. The at least one predetermined protection assisting conditions may pertain to conditions that may be relevant whether or not to perform differential protection. For instance, one predetermined protection assisting condition may be whether there is an anomaly or an abnormal condition in the electrical power network that has not been detected by the differential protection relays. Thus, the protection assistance device 100 may identify or receive information of such an anomaly or abnormal condition.

The protection assistance device 100 is configured to provide protection assisting information to the first protection relay R_{A} and the second protection relay R_{B} via the secondary communication network 1002. The protection assisting information comprises an instruction to activate differential protection when at least one predetermined protection assisting condition of said at least one predetermined protection assisting condition is satisfied. Thereby, the protection assisting device 100 may provide differential protection assistance to the protection systems.

While Fig. 1a only illustrates two protection systems implemented at respective substations, it should be understood that the protection assisting device 100 of the present disclosure is not limited to only provide differential protection assistance to a pair of differential protection relays, but may provide differential protection assistance to any one of a plurality of pairs of differential protection relays of protection systems of any two substations in an electrical power network.

Moreover, as exemplified in Fig. 1a, the first protection relay R_{A} may be communicatively connected to a first merging unit MU_{A}. The first merging unit MU_{A} may be configured to collect data from a first current transformer CT_{A} for providing or facilitating a current measurement in the power line PL and from a first voltage transformer VT_{A} for providing or facilitating a voltage measurement in the power line PL. The first protection relay R_{A} is also communicatively connected to a first communication interface CI1_{A} for providing and receiving operational data via the primary communication network 1001. The first protection relay R_{A} is also communicatively connected to a second communication interface CI2_{A} for providing and receiving operational data via the secondary communication network 1002. The first protection relay R_{A} may be communicatively connected to an optional first edge device E_{A}. The first protection relay R_{A} is also communicatively connected to a first circuit breaker CB_{A}.

Similarly, as exemplified in Fig. 1a, the second protection relay R_{B} may be communicatively connected to a second merging unit MU_{B}. The second merging unit MU_{B} may be configured to collect data from a second current transformer CT_{B} for providing or facilitating a current measurement in the power line PL and from a second voltage transformer VT_{B} for providing or facilitating a voltage measurement in the power line PL. The second protection relay R_{B} is also communicatively connected to a first communication interface CI1_{B} for providing and receiving operational data via the primary communication network 1001. The second protection relay R_{B} is also communicatively connected to a second communication interface CI2_{B} for providing and receiving operational data via the secondary communication network 1002. The second protection relay R_{B} may be communicatively connected to an optional second edge device E_{B}. The second protection relay R_{B} is also communicatively connected to a second circuit breaker CB_{B}.

The protection assisting device 100 may be configured to provide the protection assisting information to the first protection relay R_{A} and the second protection relay R_{B} via a protection assisting signal. The protection assisting information may be indicated by said protection assisting signal. That is, the protection assisting signal may carry the protection assisting information as encoded information. The first protection relay and the second protection relay may then decode the protection assisting information. Alternatively, or in combination, the protection assisting information may be indicated by timing characteristics of said protection assisting signal. That is, the first protection relay and the second protection relay may as a non-limiting example receive the protection assisting signal at regular intervals during normal operations, and when an anomaly or abnormal condition is identified the protection assisting device may be configured to delay the protection assisting signal, which delay may be interpreted, should it exceed a certain time period threshold, as an instruction to perform differential protection operation.

When the first protection relay R_{A} and the second protection relay R_{B} are to perform a differential protection operation, either autonomously or based on differential protection assistance provided by the protection assisting device, they may control the first circuit breaker CB_{A} and the second circuit breaker CB_{B} respectively to disconnect the power line PL.

The protection assisting information provided by the protection assisting device 100 may be provided to the first protection relay R_{A} and the second protection relay R_{B} via a protection assisting signal PAS. In one preferred embodiment, the protection assisting information is indicated by the protection assisting signal, for instance as encoded information in said protection assisting signal. In one other preferred embodiment, the protection assisting information is indicated by timing characteristics of said protection assisting signal. That is, the protection assisting signal may be a periodic signal transmitted to each protection relay at regular periodic intervals, and the protection assisting information, such as information that an anomaly or an abnormal condition has been identified, may be indicated by a delay of the protection assisting signal. The protection relays may be configured to act accordingly, either delay or initiate a differential protection operation, if the delay of the protection assisting signal exceeds a certain time period.

As mentioned, the protection assisting device 100 is configured to determine whether said first operational data and/or the second operational data satisfies at least one predetermined protection assisting condition. In one preferred embodiment, as exemplified in Figs. 1b, the first operational data comprises first source data SD_{A} comprising at least one electrical parameter based at least on said first power line measurement of the power line PL at the first substation 10_{A}. In the preferred embodiment, the source data SD_{A} is communicated from the first protection relay R_{A} to the second protection relay R_{B} via the primary communication network and is received as destination data DD_{A}. The protection assisting device 100 is configured to receive the first operational data comprising the first source data SD_{A} and the second operational data comprising the first destination data DD_{A} via the secondary communication network 1002. After the first source data SD_{A} and the first destination data DD_{A} have been received, the protection assisting device 100 is configured to determine data integrity of the first destination data DD_{A} based on a comparison with the first source data SD_{A}. From this comparison, it may be seen whether the first destination data DD_{A} corresponds to the first source data SD_{A} after transmission as it should following a successful transmission. The at least one predetermined protection assisting condition of said at least one predetermined protection assisting condition may thus be an anomaly in data integrity of said first destination data DD_{A}. If an anomaly is detected, the protection assisting device 100 may provide the protection assisting information, which comprises information of this anomaly, to the respective protection relays. After having received the protection assisting information, the protection relays may be informed that there is a discrepancy in the data being communicated between the protection relays. This may thus serve as a reason to delay a protection assisting operation until the anomaly has been resolved. Thus, it increases the probability of the differential protection relays perform differential protection operation in response to accurate data.

The protection assisting device 100 may be configured to implement the same for the opposite case, i.e., as exemplified in Fig. 1c, that the second operational data comprises second source data SD_{B} comprising at least one electrical parameter based at least on said second power line measurement of the power line PL at the second substation 10_{B}, and that the second source data SD_{B} is communicated from the second protection relay R_{B} to the first protection relay R_{A} via the primary communication network and is received as second destination data DDs. The protection assisting device 100 is configured to receive the first operational data comprising the second destination data DD_{A} and the second operational data comprising the second source data SD_{B} via the secondary communication network 1002. After the second source data SD_{B} and the second destination data DD_{B} has been received, the protection assisting device 100 is configured to determine data integrity of the second destination data DD_{B} based on a comparison with the second source data SD_{B}.

It should be understood that the protection assisting device 100 may be configured to perform data integrity check of the first destination data DD_{A} and the second destination data DD_{B} in combination.

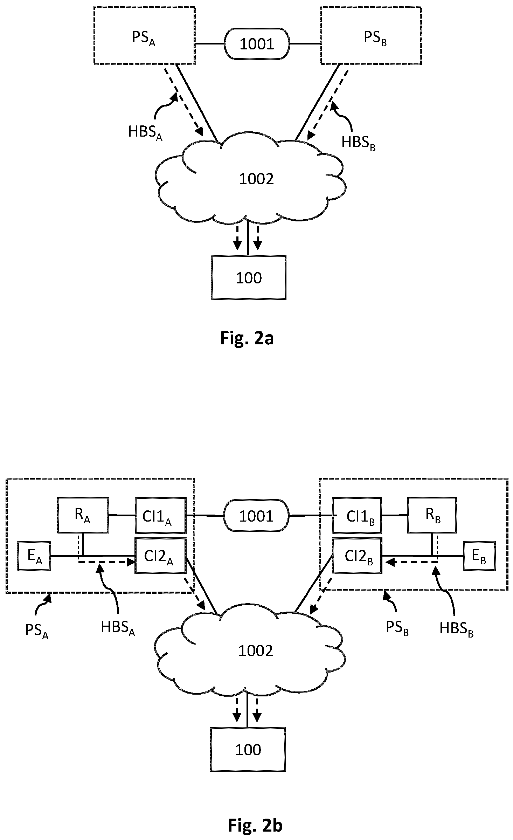

In one preferred embodiment, the protection assisting device 100 is configured to provide said protection assisting information based at least on heartbeat signals from the first protection system PS_{A} and the second protection system PS_{B} as schematically illustrated in Fig. 2a. The protection assisting device 100 is configured to receive at least one heartbeat signal HBS_{A} from the first protection system PS_{A} and at least one heartbeat signal HBS_{B} from the second protection system PS_{B}. The heartbeat signals HBS_{A}, HBS_{B} may indicate a health status of a corresponding element of the protection system (such as a protection relay, a network device, etc.) or a health status of the protection system as a whole. The heartbeat signals may be periodic signal having a predetermined periodicity. When the protection assisting device does not receive one of the heartbeat signals within a certain time period, the protection assisting device 100 may be configured to identify that the component associated with the heartbeat signal as malfunctioning. The protection assisting device 100 may treat this malfunctioning as one of the at least one predetermined protection assisting condition. That is, if one of the heartbeat signals is not received as expected, the protection assisting device 100 is configured to inform each protection relays that the component associated with the not-yet-received heartbeat signal, after which the protection relays may delay or initiate a differential protection operation depending on the situation.

In one preferred embodiment, as schematically illustrated in Fig. 2b, the protection assisting device 100 is configured to receive heartbeat signals from the respective protection relays R_{A}, R_{B}. By receiving these heartbeat signals, the protection assisting device 100 may identify if either of the protection relays begin to malfunction. If that is the case, the protection assisting device 100 is configured to provide the protection assisting information to each of the protection relays with an instruction to delay any differential protection operation.

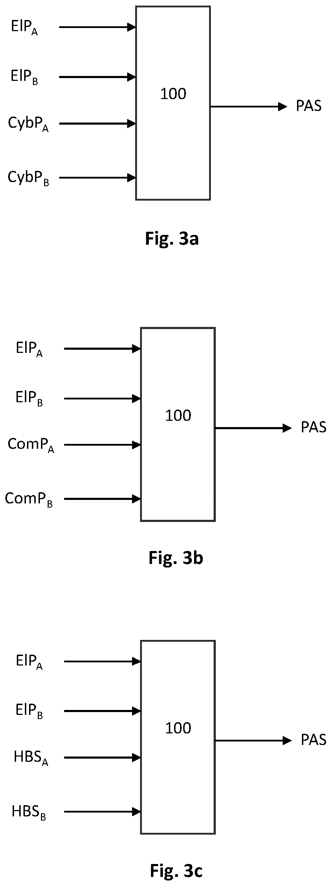

Figs. 3a-3c schematically illustrate embodiments wherein the protection assisting device 100 is configured to determine a protection assisting signal PAS based on different sets of parameters received from the protection systems.

In one embodiment, as schematically illustrated in Fig. 3a, the protection assisting device 100 is configured to receive a first electrical parameter EIP_{A} and a first cyber security parameter CybP_{A} from the first protection system and a second electrical parameter EIP_{B} and a second cyber security parameter CybP_{B} from the second protection system. The electrical parameters EIP_{A}, EIP_{B} are generally at least one sample value or at least one phasor value of a current or a voltage in the power line. However, the electrical parameters may be other electrical parameters. The cyber security parameters CybP_{A}, CybP_{B} are parameters which indicate whether the substations or the protection systems thereof are subject to a cyber-attack. Such cyber security parameters may for instance include unusual network traffic patterns or unexpected data protocols in data being communicated between the protection relays. The protection assisting device 100 may be configured to determine whether the electrical parameters and the cyber security parameters satisfy at least one predetermined protection assisting condition. As an example, the protection assisting device 100 may be configured to provide protection assisting information which may indicate that there is an anomaly based on the electrical parameters but also an anomaly based on the cyber-security parameters which indicating that at least one substation is subject to a cyber-attack. One object of the cyber-attack may be to cause a blackout at a certain location. Such a blackout may be initiated by manipulating the electrical parameters to give rise to an anomaly indicative of a current leakage. As the protection relays are configured to activate differential protection in response to such anomalies, differential protection may be activated despite there is no genuine need for it. As such, if the cyber security parameters indicate at least one of the substations are subject to a cyber-attack, the electrical parameters may be treated as unreliable. That is, even if the electrical parameters indicate a reason for differential protection to be activated, the protection assisting device may nonetheless delay activation thereof. The protection assisting device 100 may be configured to provide the protection assisting signal PAS to instruct the protection relays to delay the differential protection operation until the cyber-attack threat has been resolved.

In one embodiment, as schematically illustrated in Fig. 3b, the protection assisting device 100 is configured to receive a first electrical parameter EIP_{A} and a first communication status parameter ComP_{A} from the first protection system and a second electrical parameter EIP_{B} and a second communication status parameter ComP_{B} from the second protection system. The communication status parameters may indicate a status of the communicative capability between the first protection system and the second protection system. That is, the protection assisting device 100 may receive information about the communicative capability between the first protection system and the second protection system, which information may specify e.g., a certain communication latency or a communication abruption, each of which may indicate the electrical parameters as being unreliable. Consequently, even if the electrical parameters indicate a reason for differential protection to be activated, the protection assisting device 100 may nonetheless delay activation thereof until any anomaly indicated by the communication status parameters has been resolved.

In one embodiment, as schematically illustrated in Fig. 3c, the protection assisting device 100 is configured to receive a first electrical parameter EIP_{A} and a first heartbeat signal HBS_{A} from the first protection system and a second electrical parameter EIP_{B} and a second heartbeat signal HBSB from the second protection system. The heartbeat signal may indicate whether the protection systems or any element thereof (such as the respective protection relay) functions as intended. If any of the heartbeat signals is not received within a certain time period, the protection assisting device 100 may be configured to identify the element associated with the delayed heartbeat signal as malfunctioning. Depending on which element is malfunctioning, the protection assisting device may instruct any one of the differential protection relays to activate or delay differential protection.

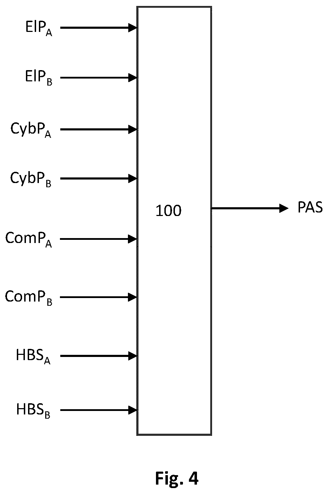

Fig. 4 schematically illustrates an embodiment wherein the protection assisting device 100 is configured to determine a protection assisting signal PAS based on a combination of different sets of parameters received from the protection systems. In particular, the different sets of parameters comprise electrical parameters, cyber-security parameters, communication status parameters, and heartbeat signals. The protection assisting device 100 may be configured to determine whether to activate or delay a differential protection operation only if all the different sets of parameters are in agreement.

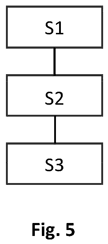

Fig. 5 schematically illustrates a method of differential protection assistance according to one embodiment of the present disclosure. The method concerns providing protection assistance to a first protection system PS_{A} at a first substation 10_{A} of an electrical power network EPN and a second protection system PS_{B} at a second substation 10_{B} of the electrical power network EPN, the first substation 10_{A} and the second substation 10_{B} electrically connected to a power line PL, the first protection system PS_{A} and the second protection system PS_{B} communicatively connected via a primary communication network 1001, said first protection system PS_{A} and said second protection system PS_{B} cooperating to provide differential protection via a respective first protection relay R_{A} and a second protection relay R_{B} based at least on a first power line measurement of the power line PL at the first substation 10_{A} and a second power line measurement of the power line PL at the second substation 10_{B}. The method comprises receiving S1 first operational data from the first protection system PS_{A} and second operational data from the second protection system PS_{B} via a secondary communication network 1002 different from the primary communication network 1001, said secondary communication network 1002 being a non-dedicated communication network. The method comprises determining S2 whether said first operational data and/or said second operational data satisfies at least one predetermined protection assisting condition. The method comprises providing S3 protection assisting information to the first protection relay R_{A} and the second protection relay R_{B} via the secondary communication network 1002, wherein said protection assisting information comprises an instruction to activate differential protection when at least one predetermined protection assisting condition of said at least one predetermined protection assisting condition is satisfied.

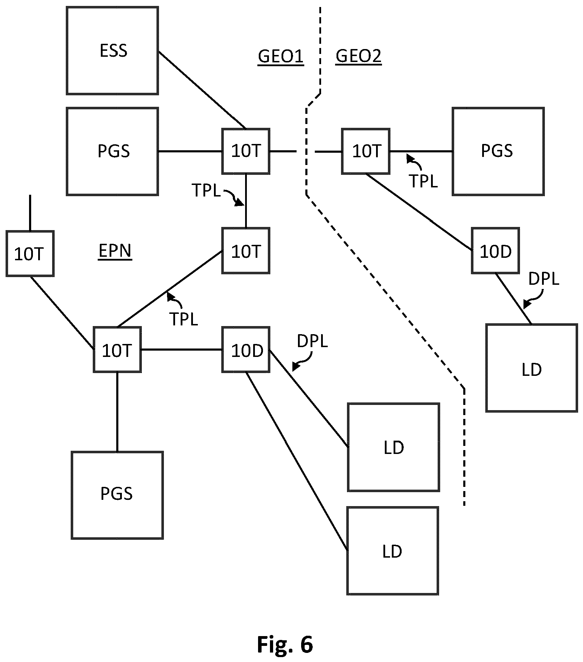

A non-limiting example of an electrical power network EPN is schematically illustrated in Fig. 6, wherein the electrical power network EPN is exemplified to comprise a plurality of power generation systems PGS, a power supporting system such as an energy storage system ESS, and a plurality of transmission substations 10T and plurality of transmission power lines TPL interconnecting the transmission substations 10T and connecting the plurality of power generation systems PGS and the power supporting system ESS to at least one transmission substation 10T. The electrical power network EPN is further exemplified to comprise a distribution substation 10D and a plurality of distribution power lines connecting the distribution substation 10D to a plurality of loads LD. The electrical power network EPN is further exemplified to be located within a first geographical area GEO1 and to be electrically connectable to a transmission substation 10T of an electrical power network located within a second geographical area GEO2 different from the first geographical area GEO1.

The electrical power network EPN is configured to deliver electrical power from at least one source of electrical power to one or more loads LD for consuming said electrical power. The at least one source of electrical power may be at least one power generation system PGS and/or at least one power supporting system ESS. The electrical power network EPN may be configured to be electrically connected to, or comprise, at least one power generation system PGS. The at least one power generation system PGS may be one power generation system PGS or a plurality of power generation system PGS. Two or more power generation systems PGS of said plurality of power generation systems may be located at different geographical locations, GEO1, GEO2, as exemplified in Fig. 6. Any one power generation system of the at least one power generation system may be any one of a thermal power plant, a hydroelectric power plant, a nuclear power plant, a wind power facility, or a solar power facility.

Further, although omitted from Fig. 6 for schematic simplicity, each power generation system PGS of the at least one power generation system comprises at least one power generation unit configured to generate electrical power. The at least one power generation unit of any one of the at least one power generation system may be one power generation unit or a plurality of power generation units.

Any one of the at least one power generation system may be configured to be electrically connected to an power supporting system ESS.

In Fig. 6, the electrical power network EPN is schematically illustrated to comprise one power supporting system ESS electrically connected to a transmission substation 10T. Depending on design and/or control strategy, the power supporting system ESS may provide active power (real power) support and/or reactive power support.

As a non-limiting example, the power supporting system may be configured to provide active power support by storing excess electricity during low demand and supply power during high demand. As a non-limiting example, the power supporting system may be configured to provide active power support by supplying or absorbing power to maintain an operation frequency of the electrical power network within operational limits relative a target operation frequency (e.g., 50 Hz in Europe or 60 Hz in USA). In addition, as further non-limiting examples, an power supporting system ESS may be configured to provide active power support by implementing any one of black start capability or renewable energy power balancing. As a non-limiting example, the power supporting system may be configured to provide reactive power support by injecting or absorbing reactive power to stabilize voltage levels in transmission system and/or distribution system. As a non-limiting example, the power supporting system may be configured to provide reactive power support by supplying or absorbing reactive power to improve power factor.

The electrical power network of the present disclosure may be configured to be electrically connected to, or comprise, at least one power supporting system. The at least one power supporting system may be one power supporting system or a plurality of power supporting systems. The at least one power supporting system may be configured to store electrical power for later use. The at least one power supporting system may be configured to supply electrical energy to the electrical power network in response to a demand variation. Each power supporting system may comprise at least one energy storage unit configured to store electrical energy.

The at least one energy storage unit may be any one of a battery, a super-battery, a capacitor, a super-capacitor, or a flywheel.

The electrical power network may comprise at least one transmission system and/or at least one distribution system configured to electrically connect to at least one substation 10T, 10D. The at least one transmission system and/or the at least one distribution system comprises at least one power line TPL, DPL.

The at least one transmission system may be configured to transmit electrical power from at least one power generation system and/or at least one power supporting system to at least one substation via at least one power line. The transmission system may be configured to electrically connect a plurality of substations using a plurality of power lines to form a network of interconnected substations. Each substation may be configured to receive electrical power from at least one preceding substation via at least one incoming power line and/or supply electrical power to at least one subsequent substation via at least one outgoing power line.

The at least one transmission system may be configured for single-phase or three-phase power transmission. That is, the number of power lines anywhere in the transmission system may correspond to single-phase or three-phase power transmission. However, the present disclosure is not limited to single-phase or three-phase power transmission, but any number of phase power transmission may be implemented.

The at least one transmission system may be configured to operate at high voltage, HV, to reduce transmission losses.

The at least one transmission power line may be adapted for high voltage (HV), specifically high voltage alternating current (HVAC) or high voltage direct current (HVDC).

The at least one transmission power line may be an overhead power line or an underground power line.

Any one power line of the at least one power line of the transmission system may be adapted for HV, specifically HVAC or HVDC.

The at least one distribution system may be configured to distribute electrical power to at least one load LD via at least one power line DPL. The distribution system may be configured to operate at lower voltage levels suitable for end-use applications. The distribution system may be electrically connected to at least one distribution substation 10D configured to step down the voltage of electrical power received from the transmission system to a level suitable for distribution to loads. The at least one load LD may comprise industrial loads, commercial loads, residential loads, or combinations thereof.

The distribution system may be configured for single-phase or three-phase power distribution. That is, the number of power lines anywhere in the distribution system may correspond to single-phase or three-phase power distributed. However, the present disclosure is not limited to single-phase or three-phase power distribution, but any number of phase power distribution may be implemented.

The at least one power line of the distribution system may be adapted for medium voltage, MV, alternating current, MVAC, or low voltage, LV, alternating current, LVAC.

The at least one power line of the distribution system may be adapted for medium voltage direct current, MVDC, or low voltage alternating current, LVAC.

The at least one power line of the distribution system may be an overhead power line or an underground power line.

Any one power line of the distribution system may be formed from materials such as copper or aluminum, selected for their electrical conductivity and durability. The at least one power line of the distribution system may be configured as an overhead power line supported by poles and insulators, or as an underground power line, typically insulated with materials like cross-linked polyethylene (XLPE) or ethylene propylene rubber (EPR) for electrical insulation and protection against environmental factors. The at least one power line of the distribution system may be designed to handle the specific voltage levels associated with MVAC, MVDC, LVAC, or LVDC, with appropriate voltage ratings and insulation to ensure safe and efficient power distribution.

Fig. 6 schematically illustrates the electrical power network EPN to be electrically connected to a plurality of loads LD. Here, a load may refer to any device, system, or facility that consumes electrical power. Loads can vary in size, type, and electrical characteristics, depending on their application. Loads may be residential loads (household appliances, lighting, HVAC systems, and personal electronic devices), commercial load (office buildings, hospitals, etc.), industrial load (factories, manufacturing plants etc.) or transportation load (electric trains, trams, metro systems, and electric vehicle, EV, charging stations).

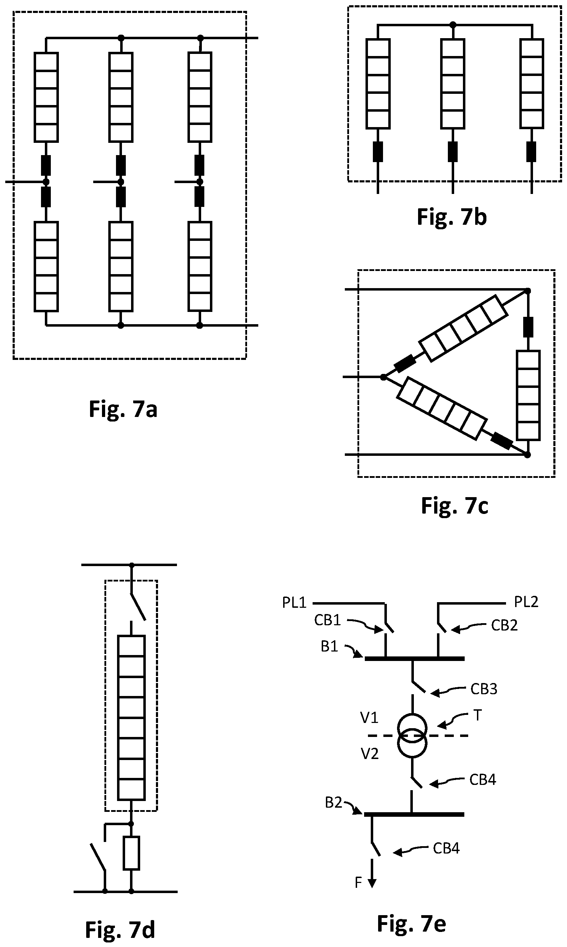

The electrical power network EPN may comprise at least one power supporting system such as a voltage source converter. Figs. 7a-7c schematically illustrate a voltage source converter configured to provide power support in terms of active power and/or reactive power, frequency, voltage, current, etc. as needed. The VSC 10 may be adapted as a monolithic VSC or as a multi-level converter, MMC, based VSC (see Figs. 7a-7c). A monolithic VSC may refer to a VSC implementing a single integrated unit with a centralized design with a few large semiconductor devices (e.g., IGBTs or MOSFETs) to handle high voltages and currents. A MMC-based VSC may refer to a VSC that implements a modular architecture, where the VSC is composed of multiple submodules arranged in series in each phase leg. The MMC-based VSC 10 may be designed as a YY-MMC VSC (see Fig. 7a), a Y-connected chain-link VSC (see Fig. 7b), or a D-connected chain-link VSC (see Fig. 7c). The power supporting system may alternatively be an energy storage system ESS (see Fig. 7d).

The at least one substation of the electrical power network may be configured to support bidirectional power flow, allowing power to be transmitted in either direction as needed to meet system requirements or operational conditions.

Each substation 10T, 10D of the at least one substation generally comprises at least one busbar, which may be a single conductor or a group of conductors. The at least one busbar may be housed in an insulated enclosure. The at least one busbar is configured to electrically connect to a power line of the transmission system or the distribution system. As schematically illustrated in Fig. 7e, a first power line PL1 and a second power line PL2 may be electrically connected or connectable to the same busbar B1. A first circuit breaker CB1 may be configured to disconnect the first power line PL1 from the first busbar B1. A second circuit breaker CB2 may be configured to disconnect the second power line PL2 from the first busbar B1. A plurality of power lines may be electrically connected or connectable to the same busbar. The at least one busbar may facilitate the management and distribution of electrical power within the substation, comprising voltage transformation, power routing, fault protection, and synchronization of power flow.

The substation may comprise at least one transformer. The transformer may be configured to step up or step down the voltage of the electrical power based on its voltage ratio, which is determined by the number of turns on the primary and secondary windings. As a non-limiting example, a transformer T is schematically illustrated in Fig. 6e. The first busbar B1 is electrically connected or connectable to a primary winding of the transformer T. A second busbar B2 is electrically connected or connectable to a secondary winding of the transformer T. The transformer T may be configured to be disconnectable from the first busbar B1 and/or the second busbar B2 by means of a third circuit breaker CB3 and a fourth circuit breaker CB4 respectively.

The transformer T may be configured to transform voltage from a first voltage level V1 to a second voltage level V2 depending on the transformer's voltage ratio. As a non-limiting example, the first voltage level V1 may be HV and the second voltage level V2 may be MV. As a non-limiting example, the first voltage level V1 may be MV and the second voltage level V2 may be LV.

The transformer may comprise at least one load tap changer (not shown in Fig. 5) configured to adjust the number of connected windings in the primary windings or the secondary winding. This allows adjustment of the voltage ratio in response to load conditions, ensuring stable power delivery and preventing overloads. The at least one load tap changer may be configured to operate automatically in response to load conditions. Alternatively, the at least one load tap changer may be configured to be operated manually.

The substation may comprise at least one power line switch, which may be one power line switch or a plurality of power line switches. Each power line switch may be configured to disconnect a first power line and connect a second power line. That is, the substation may be configured to use the at least one power line switch to reroute electrical power between different parts of the network as necessary to maintain system stability and operational flexibility.

In some cases, the substation may be configured to synchronize received power with other network components by adjusting phase alignment or frequency. Further, a substation may also comprise control systems to monitor and adjust power distribution based on real-time demand and system conditions. Additionally, the substation may integrate with at least one power supporting system to stabilize the network during high demand or intermittent supply by temporarily storing power for later use.

It should be understood that the electrical power network may be adapted to extend within a first geographical area GEO1, such as a country. The electrical power network may be configured to connect with an electrical power network, or any component thereof, which is located in a second geographical area GEO2 which is different from the first geographical area GEO1, as schematically illustrated in Fig. 6.

One or more substations of the electrical power network may comprise a protection system. The protection system may ensure safe and reliable operation of the substation. The protection system may be configured to detect and respond to abnormal conditions, such as faults or system disturbances, preventing damage to equipment and maintaining overall system stability.

The protection system may comprise at least one protection relay. A protection relay is configured to continuously monitor electrical parameters, such as voltage, current, and frequency, and compare these values against predefined thresholds. Upon detecting an abnormal condition, such as a fault or short circuit, the protection relay may be configured to initiate an appropriate response, typically by sending a signal to a circuit breaker to disconnect a part of the electrical power network affected by the abnormal condition. The protection relay may be configured to monitor system conditions such as overvoltage, undervoltage, overcurrent, and frequency deviations.

The protection system may further comprise at least one circuit breaker. The at least one circuit breaker may be configured to disconnect a part of the electrical power network, e.g., by disconnecting at least one power line. In response to a signal from the protection relay, the circuit breaker may be configured to automatically or manually disconnect the part of the electrical power network. Once an abnormal condition is cleared, the circuit breaker may be reset to restore normal operation.

The protection system may comprise a merging unit. The merging unit may be configured to collect at least one electrical parameter associated with the substation, including, but not limited to, a power line measurement of a power line at the substation. The power line measurement may indicate at least one of, or any combination of a current, a voltage, and a frequency of the power being transmitted in the power line. The merging unit may be configured to collect electrical parameters of components of the substation. The merging unit may be configured to collect operational characteristics of the network. The merging unit may be configured to format collected data into a unified, standardized format. This may enable a seamless transmission to higher-level control systems or protection relays for further analysis and decision-making.

A power line measurement may be performed by a measurement device. For instance, a current transformer (CT) may be used to measure current by stepping it down to a manageable value. For instance, a voltage transformer (VT) (or a potential transformer) may be used to measure voltage by reducing high voltages to a lower, measurable level. A phase-Locked Loop (PLL) circuit may be used to measure frequency by analyzing an oscillation of the power line's AC signal. Any of these power line measurements may be collected by the aforementioned merging unit.

Moreover, differential protection may be provided by the cooperation of a first protection relay at a first substation and a second protection relay at a second substation. This arrangement may ensure protection of the electrical power network by detecting differences in current between substations, enabling rapid fault detection and optionally isolation if needed.

While the foregoing is directed to embodiments of the disclosure, other and further embodiments may be devised without parting from the inventive concept discussed herein. The scope of the invention is however determined by the claims.

## Claims

1. A protection assisting device (100) configured to communicatively connect to a first protection system (PS_{A}) at a first substation (10_{A}) of an electrical power network (EPN) and a second protection system (PS_{B}) at a second substation (10_{B}) of the electrical power network (EPN), the first substation (10_{A}) and the second substation (10_{B}) electrically connected to a power line (PL), the first protection system (PS_{A}) and the second protection system (PS_{B}) communicatively connected via a primary communication network (1001), said first protection system (PS_{A}) and said second protection system (PS_{B}) cooperating to provide differential protection via a respective first protection relay (R_{A}) and a second protection relay (R_{B}) based at least on a first power line measurement of the power line (PL) at the first substation (10_{A}) and a second power line measurement of the power line (PL) at the second substation (10_{B}), the protection assisting device (100) configured to:
communicatively connect to said first protection system (PS_{A}) and said second protection system (PS_{B}) via a secondary communication network (1002) different from the primary communication network (1001);
receive first operational data from the first protection system (PS_{A}) and second operational data from the second protection system (PS_{B}) via the secondary communication network (1002);
determine whether said first operational data and/or said second operational data satisfies at least one predetermined protection assisting condition, and
provide protection assisting information to the first protection relay (R_{A}) and the second protection relay (R_{B}) via the secondary communication network (1002), wherein said protection assisting information comprises an instruction to activate or delay differential protection when at least one predetermined protection assisting condition of said at least one predetermined protection assisting condition is satisfied,
wherein the secondary communication network (1002) is a non-dedicated communication network.

2. The protection assisting device (100) according to claim 1, wherein said protection assisting information is provided to the first protection relay (R_{A}) and the second protection relay (R_{B}) via a protection assisting signal, wherein said protection assisting information is indicated by said protection assisting signal and/or by timing characteristics of said protection assisting signal.

3. The protection assisting device (100) according to any one of claims 1-2, wherein said at least one predetermined protection assisting condition comprises a plurality of predetermined protection assisting conditions, wherein said protection assisting device (100) is configured to provide said protection assisting information comprising said instruction to activate differential protection when at least two predetermined protection assisting conditions of said plurality of predetermined protection assisting conditions are satisfied.

4. The protection assisting device (100) according to any one of claims 1-3, configured to provide the protection assisting information or said protection assisting signal based on at least one protection assisting condition signal, wherein each protection assisting condition signal indicates whether a corresponding at least one predetermined protection assisting condition associated with said each protection assisting condition signal is satisfied.

5. The protection assisting device (100) according to any one of claims 1-4, wherein said secondary communication network (1002) is a cloud communication network.

6. The protection assisting device (100) according to any one of the preceding claims, wherein
said first operational data comprises first source data (SDA) comprising at least one electrical parameter based at least on said first power line measurement of the power line (PL) at the first substation (10A), and/or
said second operational data comprises second source data (SDB) comprising at least one electrical parameter based at least on said second power line measurement of the power line (PL) at the second substation (10B).

7. The protection assisting device (100) according to claim 6, wherein
at least one predetermined protection assisting condition of said at least one predetermined protection assisting condition is at least one of said electrical parameter of said first source data (SDA) and/or said at least one electrical parameter of said second source data (SDB) being outside a predefined normal mode of operation, and/or
at least one predetermined protection assisting condition of said at least one predetermined protection assisting condition is an anomaly based on a comparison between at least one of said electrical parameter of said first source data and a corresponding at least one of said electrical parameter of said second source data.

8. The protection assisting device (100) according to any one of claims 6-7, configured to use the secondary communication network (1002) to:
communicate said first source data (SD_{A}) from the first protection relay (R_{A}) of the first protection system (PS_{A}) to the second protection relay (R_{B}) of the second protection system (PS_{B}), and/or
communicate said second source data (SD_{B}) from the second protection relay (R_{A}) of the second protection system (PS_{B}) to the first protection relay (R_{A}) of the first protection system (PS_{A}).

9. The protection assisting device (100) according to any one of claims 6-8, wherein
the second operational data comprises first destination data (DD_{A}) being the first source data (SD_{A}) as received from the first protection system (PS_{A}) in the second protection system (PS_{B}) via the primary communication network (1001) or the secondary communication network (1002), wherein the protection assisting device (100) is configured to determine data integrity of the second destination data (DD_{B}) based on a comparison with the second source data (SD_{B}), wherein at least one predetermined protection assisting condition of said at least one predetermined protection assisting condition is an anomaly in data integrity of said second destination data (DD_{B}), and/or
the first operational data comprises second destination data (DD_{B}) being the second source data (SD_{B}) as received from the second protection system (PS_{B}) in the first protection system (PS_{A}) via the primary communication network (1001) or the secondary communication network (1002), wherein the protection assisting device (100) is configured to determine data integrity of the first destination data (DD_{A}) based on a comparison with the first source data (SD_{A}), wherein at least one predetermined protection assisting condition of said at least one predetermined protection assisting condition is an anomaly in data integrity of said first destination data (DD_{A}).

10. The protection assisting device (100) according to any one of claims 6-9, wherein
said at least one electrical parameter of the first source data (SD_{A}) comprises a sample value and/or a phasor value based at least on said first power line measurement, and/or
said at least one electrical parameter of the second source data (SD_{B}) comprises a sample value and/or a phasor value based at least on said second power line measurement.

11. The protection assisting device (100) according to claim 10, configured to:
perform a first source phasor computation on the first source data (SD_{A}),
perform a first destination phasor computation of the first destination data (DD_{A}),
determine further data integrity of the first destination data (DD_{A}) based on a comparison between a result of the first source phasor computation and a result of the first destination phasor computation,
wherein at least one predetermined protection assisting condition of said at least one predetermined protection assisting condition is an anomaly in further data integrity of said first destination data (DD_{A}),
and/or wherein the protection assisting device (100) is configured to:
perform a second source phasor computation on the second source data (SD_{A}),
perform a second destination phasor computation of the second destination data (DD_{B}),
determine further data integrity of the second destination data (DD_{B}) based on a comparison between a result of the second source phasor computation and a result of the second destination phasor computation,
wherein at least one predetermined anomaly condition of said at least one predetermined anomaly condition is an anomaly in further data integrity of said second destination data (DD_{B}).

12. The protection assisting device (100) according to any one of the preceding claims, wherein
said first operational data and/or second operational data comprises at least one cyber security parameter, wherein at least one predetermined protection assisting condition of said at least one predetermined protection assisting condition is said at least one cyber security parameter of said first operational data and/or said second operational data indicating the electrical power network (EPN) or any component thereof being subjected to a cyber-attack, and/or
said first operational data comprises diagnostic data of the first protection relay (R_{A}) and/or said second operational data comprises diagnostic data of the second protection relay (R_{B}), wherein at least one predetermined protection assisting condition of said at least one predetermined protection assisting condition is said diagnostic data indicating that the first protection relay (R_{A}) and/or the second protection relay (R_{B}) is subjected to malfunction or an increased risk of malfunction, or is inactive, and/or
said first operational data comprises data of a first heartbeat signal from a first device of the first protection system (PS_{A}) and/or the second operational data comprises data of a second heartbeat signal from a second device of the second protection system (PS_{B}), wherein at least one predetermined protection assisting condition of said at least one protection assisting condition is an anomaly in timing characteristics of said first heartbeat signal and/or of said second heartbeat signal, wherein, optionally, said first device is the first protection relay (R_{A}) and/or said second device is the second protection relay (R_{B}), and/or
said first operational data and/or said second operational data comprises communication data of said primary communication network (1001) and/or communication data of said secondary communication network (1002), wherein at least one predetermined protection assisting condition of said at least one predetermined protection assisting condition is said communication data indicating the primary communication network (1001) and/or the second communication network (1002) is subjected to a malfunction or an increased risk of malfunction or is inactive.

13. A protection assisting system (200), comprising:
the protection assisting device (100) according to any one of the preceding claims, and
said secondary communication network (1002).

14. An electrical power network (EPN) comprising:
at least one substation (10A), wherein a first substation of said at least one substation is configured to electrically connect to a second substation via a power line (PL);
a first protection system (PS_{A}) arranged at the first substation (10_{A}), wherein the first protection system comprises a first protection relay (RA) configured to cooperate with a second protection relay (R_{B}) of a second protection system (PS_{B}) at the second substation (10_{B}) to provide differential protection, and
a protection assisting device (100) according to any one of the preceding claims,
wherein, optionally, the electrical power network comprises the second substation (10B) and the second protection system (PS_{B}),
wherein, optionally, the power line (PL) is a medium voltage, MV, line; a low voltage, LV, line; or a high voltage, HV, power line.

15. A method of providing protection assistance to a first protection system (PS_{A})
at a first substation (10_{A}) of an electrical power network (EPN) and a second protection system (PS_{B}) at a second substation (10_{B}) of the electrical power network (EPN), the first substation (10_{A}) and the second substation (10_{B}) electrically connected to a power line (PL), the first protection system (PS_{A}) and the second protection system (PS_{B}) communicatively connected via a primary communication network (1001), said first protection system (PS_{A}) and said second protection system (PS_{B}) cooperating to provide differential protection via a respective first protection relay (R_{A}) and a second protection relay (R_{B}) based at least on a first power line measurement of the power line (PL) at the first substation (10_{A}) and a second power line measurement of the power line (PL) at the second substation (10_{B}), the method comprising:
receiving first operational data from the first protection system (PS_{A}) and second operational data from the second protection system (PS_{B}) via a secondary communication network (1002) different from the primary communication network (1001), said secondary communication network (1002) being a non-dedicated communication network;
determining whether said first operational data and/or said second operational data satisfies at least one predetermined protection assisting condition, and
providing protection assisting information to the first protection relay (R_{A}) and the second protection relay (R_{B}) via the secondary communication network (1002), wherein said protection assisting information comprises an instruction to activate or delay differential protection when at least one predetermined protection assisting condition of said at least one predetermined protection assisting condition is satisfied.
